# EUROPEAN PATENT APPLICATION

(11) **EP 3 454 309 A1**
(43) Date of publication of application: **13.03.2019**
(21) Application number: 18193161.9
(22) Date of filing: 07.09.2018
(51) Int. Cl.: G07G 1/00, G06K 7/00, G06K 7/10

(54) **READING DEVICE AND METHOD FOR READING COMMODITY INFORMATION FROM WIRELESS TAG ATTACHED TO COMMODITY BY THE SAME**

(30) Priority: 08.09.2017 JP 2017173458
(71) Applicant: Toshiba Tec Kabushiki Kaisha, Shinagawa-ku Tokyo (JP)
(72) Inventor: Sakurai, Wataru, Tokyo, 141-8562 (JP)
(74) Representative: Hoffmann Eitle

(57) **Abstract**

A reading device includes an accommodating unit having an opening through which a commodity is taken therein and an opening/closing lid for opening or closing the opening. The reading device includes an antenna that emits radio waves to communicate with a wireless tag attached to the commodity, an open/close state controller configured to acquire an open or closed state of the opening/closing lid. The device also includes a reading control unit configured to read commodity information from the wireless tag of each commodity by modifying a communication range of the wireless antenna to the wireless tag when the commodity is accommodated in the housing and the opening/closing lid is moved from the open state in which the opening is open to the closed state in which the opening is closed.

## Description

### CROSS-REFERENCE TO RELATED APPLICATION

This application is based upon and claims the benefit of priority from Japanese Patent Application No. 2017-173458, filed in September 8, 2017, the entire contents of which are incorporated herein by reference.

### FIELD

Embodiments described herein relate to a reading device and a method for reading commodity information from a wireless tag attached to a commodity.

### BACKGROUND

A commodity sales processing apparatus reads commodity information from an RFID (Radio Frequency Identifier) tag attached to a commodity to perform a sales registration and a settlement processing based on the commodity information. For example, the apparatus may include a reading device that collectively reads commodity information with a flat antenna embedded under a checkout counter by placing commodities or a shopping basket accommodating commodities on the upper surface of the checkout counter.

Recently, there is an increasing number of stores that employ a sales form in which the commodity sales processing apparatus described above acting as a self-checkout apparatus (a self-checkout point of sale (POS) apparatus or a self-register apparatus) is installed and a customer performs the sales registration and the settlement processing of a commodity by himself or herself. The self-checkout apparatus is also used, for example, in a settlement system in a self-service style restaurant.

### SUMMARY OF THE INVENTION

One of the objects of the present invention is to improve prior art techniques and overcome at least some of the prior art problems as for instance above illustrated.

According to a first aspect of the present invention, it is provided a reader that reads commodity information relating to a commodity from a wireless tag attached to the commodity, comprising:
a housing having an opening through which the housing is configured to receive the commodity, and an opening/closing lid configured to open or close the opening;
an antenna configured to emit radio waves to communicate with the wireless tag;
an open/close state controller configured to acquire an open state or a closed state of the opening/closing lid; and
a reading controller configured to read the commodity information from the wireless tag of the commodity by modifying a communication range of the antenna to the wireless tag when the commodity is accommodated in the housing and the opening/closing lid is moved from the open state in which the opening is open to the closed state in which the opening is closed.

Optionally, in the reader according to the first aspect of the invention, the reading controller is configured to increase a strength of the radio waves of the antenna to expand the communication range when the commodity is accommodated in the housing and the opening/closing lid is moved from the open state to the closed state.

Optionally, the reader according to the first aspect of the invention further comprises a plurality of antennas, wherein the reading controller is configured to increase a number of the antennas which emit radio waves to expand the communication range when the commodity is accommodated in the housing and the opening/closing lid is moved from the open state to the closed state.

Optionally, in the reader according to the first aspect of the invention, the reading controller is configured to adjust the antenna to move the communication range when the commodity is accommodated in the housing and the opening/closing lid is moved from the open state to the closed state.

Optionally, the reader according to the first aspect of the invention further comprises an input receiver configured to receive an input indicating incomplete reading, such that commodity information of a plurality of commodities accommodated in the housing cannot be read; and an output controller configured to output guidance to move the opening/closing lid from the open state to the closed state when the input of the incomplete reading is received.

Optionally, in the reader according to the first aspect of the invention, the reading controller is configured to adjust the antenna by moving the antenna linearly to be closer to the wireless tag.

Optionally, in the reader according to the first aspect of the invention, the housing is configured to surround outer sides of a container storing the commodity when the container is inserted through the opening.

According to a second aspect of the present invention, it is provided a method for reading commodity information from a wireless tag attached to a commodity by a reader including a housing having an opening through which the commodity is taken therein, an opening/closing lid for opening or closing the opening, and an antenna that emits radio waves to communicate with the wireless tag, the method including:
reading commodity information relating to the commodity from the wireless tag of the commodity accommodated in the housing through the antenna;
acquiring an open/close state of the opening/closing lid; and
modifying a communication range of the antenna to the wireless tag when the commodity is accommodated in the housing and the opening/closing lid is moved from the open state in which the opening is open to the closed state in which the opening is closed.

Optionally, the method according to the second aspect of the invention further comprises increasing a strength of the radio waves of the antenna to expand the communication range when the commodity is accommodated in the housing and the opening/closing lid is moved from the open state to the closed state.

Optionally, the method according to the second aspect of the invention further comprises increasing a number of antennas which emit radio waves to expand the communication range when the commodity is accommodated in the housing and the opening/closing lid is moved from the open state to the closed state.

Optionally, the method according to the second aspect of the invention further comprises adjusting the antenna to move the communication range when the commodity is accommodated in the housing and the opening/closing lid is moved from the open state to the closed state.

Optionally, the method according to the second aspect of the invention further comprises receiving an input indicating incomplete reading, such that commodity information of a plurality of commodities accommodated in the housing cannot be read; and outputting guidance to move the opening/closing lid from the open state to the closed state when the input of the incomplete reading is received.

Optionally, the method according to the second aspect of the invention further comprises adjusting the antenna by moving the antenna linearly to be closer to the wireless tag. According to a third aspect of the present application, it is provided a system that reads commodity information relating to a plurality of commodities from a plurality of wireless tags respectively attached to the plurality of commodities, comprising:
an antenna configured to emit radio waves to communicate with the respective wireless tags; and
a controller configured to
   acquire a first state or a second state of a lid of a housing configured to store the plurality of commodities; and
   read commodity information from the wireless tags of the plurality of commodities by adjusting a communication range of the antenna to the wireless tags when at least one of the plurality of commodities is accommodated in the housing and the lid is moved from the first state, in which the lid is open, to the second state, in which the lid is shut.

### DESCRIPTION OF THE DRAWINGS

Fig. 1 is a perspective view illustrating a self-checkout apparatus according to at least one embodiment;
Fig. 2 is a diagram illustrating a hardware configuration of a self-checkout apparatus according to at least one embodiment;
Fig. 3 is a block diagram illustrating a functional configuration of a self-checkout apparatus according to at least one embodiment;
Figs. 4A and 4B are diagrams illustrating a communication range of RFID antennas in a case of increasing a wave strength thereof, according to at least one embodiment;
Figs. 5A and 5B are diagrams illustrating a communication range of the RFID antennas in a case of increasing the number thereof, according to at least one embodiment;
Fig. 6 is a flowchart illustrating an operation of a self-checkout apparatus according to at least one embodiment;
Fig. 7 is a diagram illustrating a hardware configuration of the self-checkout apparatus, according to at least one embodiment;
Fig. 8 is a plan view illustrating a moving mechanism of the RFID antenna, according to at least one embodiment; and
Fig. 9 is a diagram illustrating a communication range of the RFID antenna in a case of moving the RFID antenna, according to least one embodiment.

### DETAILED DESCRIPTION

A self-checkout apparatus can read commodity information from RFID tags. In some self-checkout apparatuses, reading time may be reduced compared with existing barcode reading systems. However, an entirety of the commodity information (i.e., 100% of commodity information) may not be read even within a communication range suitably set to be able to read commodity information, due to a variation in tag performance, tag directivity, overlap of tags, influence of a commodity to which a tag is attached, circumstances of fixtures, and the like, based on characteristics of the RFID tag.

To resolve such issues, for example, if an output of a reader is increased to read 100% of the commodity information, the communication range expands. However, since information of an RFID tag which is not desired to be read may nevertheless be erroneously read, there occurs another problem, in that an adjustment or control of the output of the reader becomes troublesome. Further, some apparatuses may utilize a shielding plate or a radio wave absorber to control the communication range. However, even using such an apparatus, there may still be an RFID tag that cannot be read, and there is still another problem in that it takes time to detect the RFID tag that cannot be read. On the other hand, in the barcode reading system, commodity information can be read one by one by restricting the output of a reader and thus reducing the communication range, but reduction of the reading time cannot be achieved.

According to one embodiment, there is provided a reading device that reads commodity information relating to a commodity from a wireless tag attached to the commodity, the device including an accommodating unit having an opening through which the commodity is taken therein and an opening/closing lid for opening or closing the opening, an antenna that emits radio waves to communicate with the wireless tag, an open/close state acquisition unit configured to acquire an open or closed state of the opening/closing lid, and a reading control unit configured to read the commodity information from the wireless tag of each commodity by modifying a communication range of the antenna to the wireless tag if the commodity is accommodated in the accommodating unit and the opening/closing lid is moved from the open state in which the opening is open to the closed state in which the opening is closed.

### First Embodiment

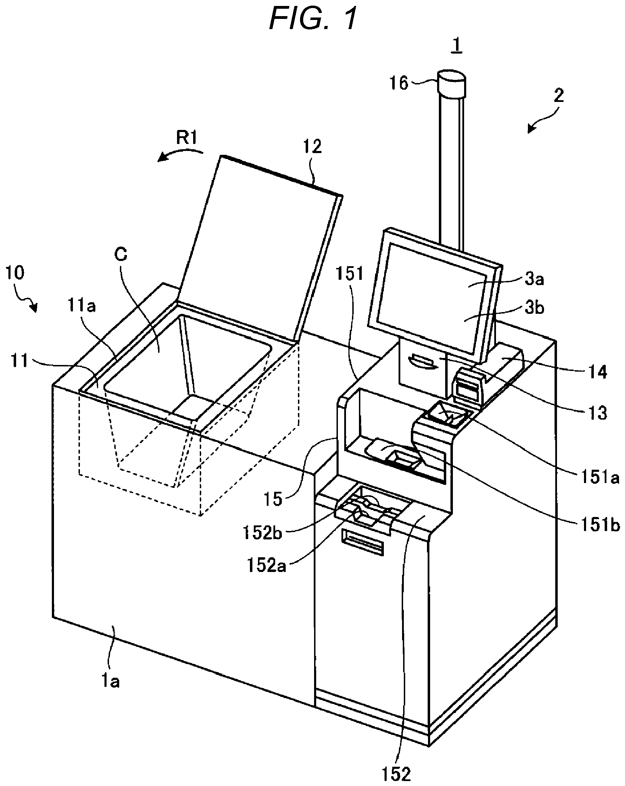

Fig. 1 is a perspective view illustrating an appearance of a self-checkout apparatus according to a first embodiment. The self-checkout apparatus 1 is a commodity sales processing apparatus used by a customer who performs a sales registration and a settlement processing of a commodity. The self-checkout apparatus 1 is installed, for example, in a store such as a supermarket or a clothing store.

The self-checkout apparatus 1 includes a reading device 10 that reads commodity information relating to a commodity from an RFID (Radio Frequency IDentifier) tag attached to the commodity and a settlement processing device 2 that performs the settlement processing based on the read commodity information. The RFID tag is an example of a wireless tag.

First, the settlement processing device 2 is described. As illustrated in Fig. 1, the settlement processing device 2 includes a display 3b, a touch panel 3a, a printer 13, a card reader 14, a settlement unit 15 (a settlement processor), and a warning lamp 16.

The display 3b is a display device such as an LCD (Liquid Crystal Display). The display 3b displays various screens relating to the sales registration and settlement of a commodity under the control of a control unit (controller) 20 described below. In Fig. 1, an example in which the display 3b is provided above the settlement unit 15 (above the printer 13 in the figure) is shown, but an installation position of the display 3b is not limited thereto.

The touch panel 3a is provided on the display 3b. The touch panel 3a receives an operation input from an operator and outputs a content of the input operation to the control unit 20. In at least one embodiment, the touch panel 3a is provided as an operation unit. However, the operation unit is not limited to the touch panel 3a, and the operation input may be performed by a hardware keyboard or the like.

The printer 13 may be a thermal printer, for example. The printer 13 prints sales-transaction contents on a paper in a predetermined format to issue a receipt indicating contents of one transaction under the control of the control unit 20 described below.

The card reader 14 reads information from a card type recording medium and outputs the read information to the control unit 20. For example, the card reader 14 reads a user identifier for identifying a customer from a membership card possessed by the customer. The card reader 14 also reads information stored in a credit card used for the settlement.

The settlement unit 15 performs sales registration of a commodity purchased by the customer based on information read by a reader/writer 31 described later. The settlement unit 15 performs a settlement processing of a commodity, on which the sales registration is performed, by a money transfer (giving and receiving of currency, e.g., in the form of cash) or an information transfer (giving and receiving of data) instead of a money transfer.

The settlement unit 15 includes a coin change machine 151 and a bill change machine 152. The coin change machine 151 determines whether a coin inserted through a coin insertion slot 151a is genuine and accepts a genuine coin, and dispenses a coin from a coin discharge slot 151b as change. The coin insertion slot 151a is a depositing slot for allowing the coin to be inserted. The coin discharge slot 151b is a dispensing slot for discharging the coin.

The bill change machine 152 determines whether a bill inserted through a bill insertion slot 152a is genuine and accepts a genuine bill, and dispenses a bill from a bill discharge slot 152b as change. The bill insertion slot 152a is a depositing slot for allowing the bill to be inserted. The bill discharge slot 152b is a dispensing slot for discharging the bill.

The coin change machine 151 and the bill change machine 152 respectively notify the control unit 20 of an amount of received or deposited money. The coin change machine 151 and the bill change machine 152 respectively receive a notification of amount of money to be dispensed as change from the control unit 20.

If there occurs a situation requiring an operation by a store clerk, the warning lamp 16 informs those in the surroundings of an occurrence of the situation by a blinking light under the control of the control unit 20.

Next, the reading device 10 is described. The reading device 10 that reads the RFID tag attached to a commodity is arranged at the left side of the display 3b of the settlement processing device 2. The reading device 10 is connected to the settlement processing device 2 by a cable (not illustrated) and outputs commodity information read from the RFID tag attached to the commodity to the settlement processing device 2.

Specifically, in at least one embodiment, an RFID tag in which a commodity code for identifying a commodity is recorded is attached to each commodity. The RFID tag has a recording region in which a flag (registered flag) indicating a registered commodity is written. The registered flag is used for preventing a commodity not yet settled from being taken out from the store. Presence or absence of the registered flag is checked, for example, at a gate installed at the entrance of the store. If no registered flag present in RFID tags (commodities), warning is issued by a notification device such as a buzzer.

The reading device 10 includes an accommodating unit (a housing) 11 with a space of a rectangular parallelepiped shape on the upper surface of a counter 1a of the self-checkout apparatus 1. The accommodating unit 11 is provided with an opening 11a which serves as a taking-in/out port for a shopping basket C containing the commodity at the upper side of the accommodating unit to take the shopping basket C into the accommodating unit 11 therethrough.

The accommodating unit 11 has an opening/closing lid 12 for opening or closing the opening 11a. The opening/closing lid 12 can be moved from an open state to a closed state by rotating in a direction indicated by an arrow R1 around a hinge mechanism, as a center, provided at the back side of the opening 11a. Accordingly, the shopping basket C is surrounded by walls of six surfaces if the lid 12 is moved to the closed state.

The opening/closing lid 12 can be moved from the closed state to the open state by being rotated in a direction opposite to the direction indicated by the arrow R1 around the hinge mechanism. A damper may be provided between the accommodating unit 11 and the opening/closing lid 12 to moderate an opening and closing speed of the opening/closing lid 12 and maintain the open state thereof.

Wall surfaces inside the accommodating unit 11 and the opening/closing lid 12 are made of a member that reflects radio waves (radio wave reflecting material) or a member that absorbs radio waves (radio wave absorbing material) to prevent external radio waves from reaching inside the accommodating unit 11. A publicly known radio wave reflecting material or radio wave absorbing material such as a metal and a mold material, or ferrite can be used. For example, outer walls (outer surfaces) and inner walls (inner surfaces) of the accommodating unit 11 and the opening/closing lid 12 may be covered with the radio wave reflecting material or the radio wave absorbing material described above.

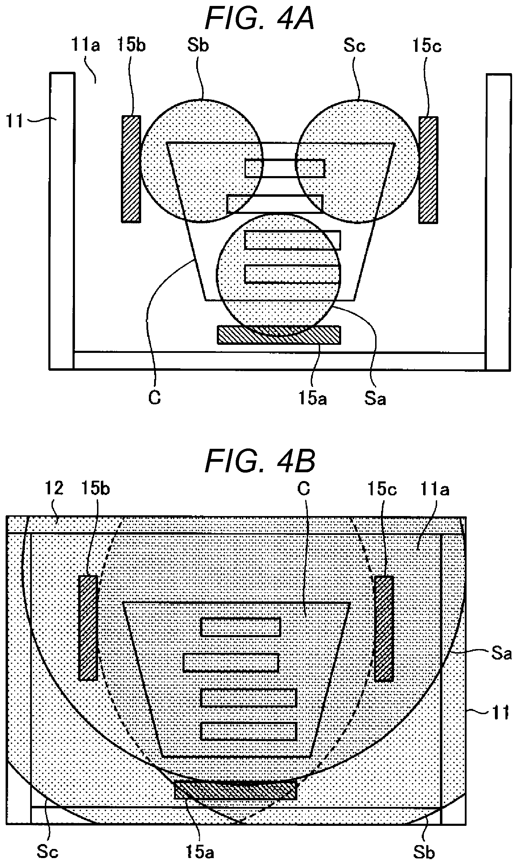

Planar RFID antennas 15a, 15b, and 15c (refer to Fig. 4A) are respectively provided on a bottom surface and side surfaces of the accommodating unit 11. In at least one embodiment, a predetermined RFID antenna among the RFID antennas 15a, 15b, and 15c is indicated as an RFID antenna 15. The RFID antenna is an example of the antenna.

The RFID antenna 15 emits radio waves of UHF band to communicate with an RFID tag present inside the accommodating unit 11, that is, the RFID tag of each commodity contained in the shopping basket C. In at least one embodiment, three RFID antennas 15 are installed, but the number of RFID antennas 15 is arbitrarily determined. In at least one embodiment, the RFID antennas 15 are respectively installed on the bottom surface and two side surfaces inside the accommodating unit 11, but an installation position of the RFID antennas 15 is also arbitrarily determined. For example, two RFID antennas 15 may be installed on the bottom surface, or on another side surface. Also, the RFID antennas 15 may be arranged at the outside of the accommodating unit depending on a shape of the accommodating unit.

According to the reading device 10 with such an arrangement as described above, the RFID tags attached to the commodities in the shopping basket C can be collectively read by taking the shopping basket C in the accommodating unit 11. If the commodity information cannot be acquired from the RFID tags of all the commodities by merely taking the shopping basket C in the accommodating unit 11, the reading device 10 of at least one embodiment sets the opening/closing lid 12 from the open state to the closed state, and changes or modifies the communication range (for example, expands communication range) between the RFID tags and the RFID antennas 15, to read the RFID tags attached to the commodities. Accordingly, commodity information can be read from the RFID tags of all the commodities. Since radio waves (noise) from the outside of the accommodating unit 11 can be shielded by covering the outer surfaces of the reading device 10 (accommodating unit 11 and opening/closing lid 12) with the radio wave reflecting material or the radio wave absorbing material, an occurrence of incorrect operation of the reading device 10 can be prevented. In the above manner, influence of an environment surrounding the reading device 10 with the arrangement described above can be reduced, and thus the reading of the RFID tag can be effectively performed.

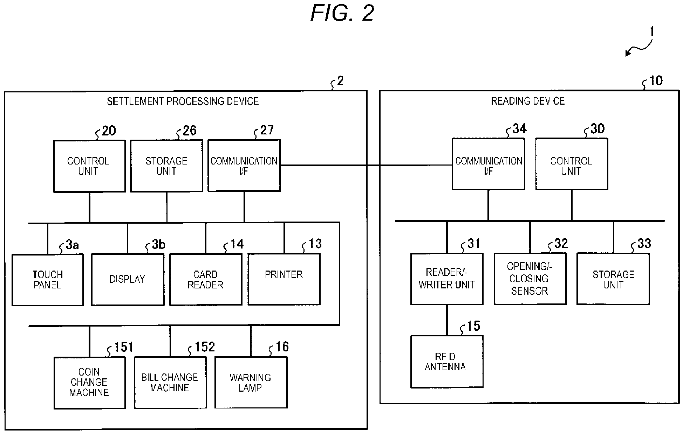

Next, a hardware arrangement of the self-checkout apparatus 1 is described. Fig. 2 is a diagram illustrating the hardware configuration of the self-checkout apparatus according to the first embodiment.

The settlement processing device 2 includes the control unit 20 having a computer composed of a CPU (Central Processing Unit), a ROM (Read Only Memory), a RAM (Random Access Memory), and the like. The ROM stores various programs executed by the CPU and various data. The RAM temporarily stores data and programs when the CPU executes various programs.

The touch panel 3a, the display 3b, the printer 13, the card reader 14, a coin change machine 151, the bill change machine 152, and the warning lamp 16 are connected to the control unit 20 through various input/output circuits (not illustrated).

The card reader 14 reads data of a point card or a credit card of a user (customer) inserted from a card insertion slot. The printer 13 prints a receipt after the settlement processing to issue the receipt from a receipt issuing slot. The coin change machine 151 processes a coin inserted from the coin insertion slot 151a or discharged to the coin discharge slot 151b. The bill change machine 152 processes a bill deposited from the bill insertion slot 152a or discharged from the bill discharge slot 152b.

A storage unit 26 and a communication I/F 27 are connected to the control unit 20 through various input/output circuits (not illustrated).

The storage unit 26 is composed of a non-volatile storage medium such as an HDD (Hard Disk Drive) or an SSD (Solid State Drive). The storage unit 26 stores various programs and various data relating to an operation of the settlement processing device 2. Data stored in the storage unit 26 includes, for example, a commodity master file in which information relating to each commodity is registered in association with a commodity code for identifying a commodity. The information relating to the commodity includes, for example, a commodity name, a unit price, and the like of corresponding commodity. The communication I/F 27 is an interface for exchanging various data with the reading device 10.

The reading device 10 includes a control unit 30 having a computer composed of the CPU, the ROM, the RAM. The ROM stores various programs executed by the CPU and various data. The RAM temporarily stores data and programs when the CPU executes various programs.

The reader/writer unit 31, an opening/closing sensor 32, a storage unit 33, and a communication I/F 34 are connected to the control unit 30 through various input/output circuits (not illustrated).

The reader/writer unit 31 transmits modulated waves (radio waves) for reading and writing data from and to the RFID tag through the RFID antennas 15 (15a to 15c). The reader/writer unit 31 outputs various information (for example, commodity information) read from the RFID tag through the RFID antennas 15 to the control unit 30. The reader/writer unit 31 outputs information to be written (for example, flag information) through the RFID antennas 15 to write the information in the RFID tag.

The opening/closing sensor 32 detects an open or closed state of the opening/closing lid 12 (rotating upward or downward) . The opening/closing sensor 32 outputs information of the open or closed state of the detected opening/closing lid 12 to the control unit 30. The opening/closing sensor 32 can be realized, for example, by a micro switch or a magnetic sensor provided at a contacting part between the accommodating unit 11 and the opening/closing lid 12 or the hinge mechanism of the opening/closing lid 12. If the inside of the accommodating unit 11 becomes dark when the opening/closing lid 12 is closed, the opening/closing sensor 32 can be realized by an optical sensor provided inside the accommodating unit 11.

The storage unit 33 is composed of a non-volatile storage medium such as the HDD or the SSD. The storage unit 33 stores various programs and various data relating to an operation of the reading device 10. The communication I/F 34 is an interface for exchanging various data with the settlement processing device 2.

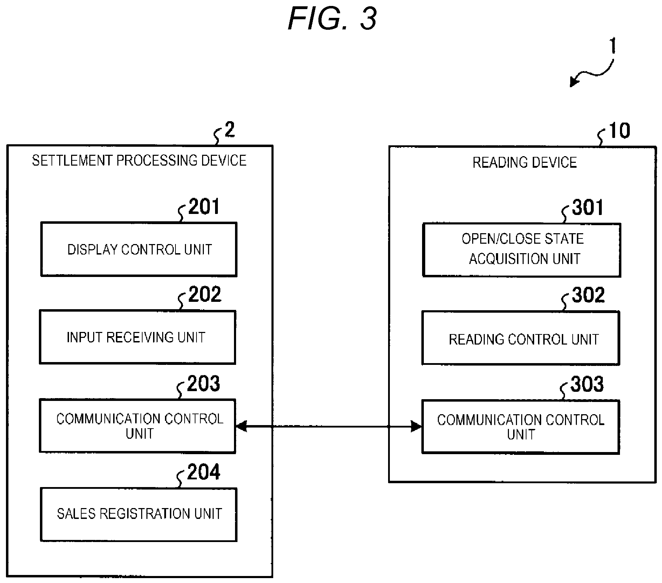

Next, a functional arrangement of the self-checkout apparatus 1 is described. Fig. 3 is a block diagram illustrating the functional arrangement of the self-checkout apparatus according to the first embodiment.

The control unit 20 (CPU) of the settlement processing device 2 cooperates with the programs stored in the storage unit 26 to realize a display control unit 201, an input receiving unit (input receiver) 202, a communication control unit 203, and a sales registration unit 204 as functional units.

The display control unit 201 controls the display 3b to display various screens on the display 3b. The display control unit 201 displays a screen including, for example, an operation element (hereinafter, referred to as a reading start button) for instructing a reading start of the commodity code (RFID tag) and an operation element (hereinafter, referred to as a reading end button) for instructing a reading end of the commodity code. The display control unit 201 also displays a screen including, for example, an operation element (hereinafter, referred to as a reading incompletion button) for indicating that the reading of the commodity codes of all the commodities is not yet completed (i.e., is incomplete). The display control unit 201 reads commodity information corresponding to a commodity code from the commodity master file based on the commodity code transmitted from the reading device 10 and displays the commodity name and the unit price of the commodity, a deposit amount, a change amount, and the like. Further, if the input receiving unit 202 receives an input indicating that the reading is not completed, the display control unit 201 outputs guidance for moving the opening/closing lid 12 from the open state to the closed state. The display control unit 201 displays, for example, a character string such as "please close lid" on the display 3b. The guidance is displayed at this time, but the guidance may be output by voice from a speaker (not illustrated). The display control unit 201 is an example of the output control unit (an output controller).

The input receiving unit 202 receives the operation input from the user through the touch panel 3a. For example, if the display 3a displays an operation screen and the operation element on the operation screen is operated (touch operation), the input receiving unit 202 outputs an instruction corresponding to the operation element touched to the control unit 20. If the reading start button (one of the operation elements) is operated by the user, the input receiving unit 202 receives the input of a reading start instruction. If the reading end button (another operation element) is operated by the user, the input receiving unit 202 also receives the input of a reading end instruction. Further, if the reading incompletion button (still another operation element) is operated by the user, the input receiving unit 202 receives the input indicating that the read is not yet completed.

The communication control unit 203 controls the communication I/F 27 to perform transmission/reception of various data to or from the reading device 10 through the communication I/F 27. For example, if the reading start button is operated and the input of the reading start instruction is received, the communication control unit 203 transmits the received reading start instruction to the reading device 10. If the reading incompletion button is operated and the input indicating that the reading is not yet completed is received, the communication control unit 203 also transmits the received input indicating that the reading is not yet completed to the reading device 10. Then, the communication control unit 203 receives the commodity code transmitted from the reading device 10. If the reading end button is operated and the input of the reading end instruction is received, the communication control unit 203 also transmits the received reading end instruction to the reading device 10. If the sales registration is completed by the sales registration unit 204, the communication control unit 203 transmits a registration completion instruction to the reading device 10.

If the payment of a charge is confirmed by the settlement processing for each commodity corresponding to the commodity code transmitted from the reading device 10, the sales registration unit 204 performs the sales registration of the commodity codes as commodities purchased by the customer. Specifically, the sales registration unit 204 registers commodity code of each commodity together with the deposited amount, the change, and a transaction date and time in a database for registration. The database for registration may be a form in which it is included in the storage unit 26 of the settlement processing device 2 or may be included in an external device communicable with the settlement processing device 2.

The control unit 30 (CPU) of reading device 10 cooperates with the programs stored in the storage unit 33 to realize an open/close state acquisition unit (an acquisition controller) 301, a reading control unit (a reading control unit) 302, and a communication control unit 303 as the functional units.

The open/close state acquisition unit 301 cooperates with the opening/closing sensor 32 to acquire the open/close state indicating whether the opening/closing lid 12 is in an open state or in a closed state.

The reading control unit 302 controls the reader/writer unit 31 to read commodity information from RFID tag attached to each commodity contained in the shopping basket C accommodated in the accommodating unit 11 through the RFID antennas 15 or write commodity information in the RFID tag.

Specifically, if the reading start instruction input from the customer is received from the settlement processing device 2, the reading control unit 302 starts reading of the RFID tag. As the above manner, in the reading device 10, since reading of the commodity stats after the customer inputs the reading start instruction, the customer can recognize a timing of the reading start.

Further, if the indication, input by the customer, that the reading is not yet completed is received from the settlement processing device 2 and the open/close state acquisition unit 301 acquires information that the opening/closing lid 12 is moved from the open state to the closed state, the reading control unit 302 changes or modifies the communication range between the RFID antennas 15 and the RFID tags. In at least one embodiment, the reading control unit 302 expands the communication range. Accordingly, the reading device 10 can read the RFID tag of the commodity the commodity information of which cannot be read.

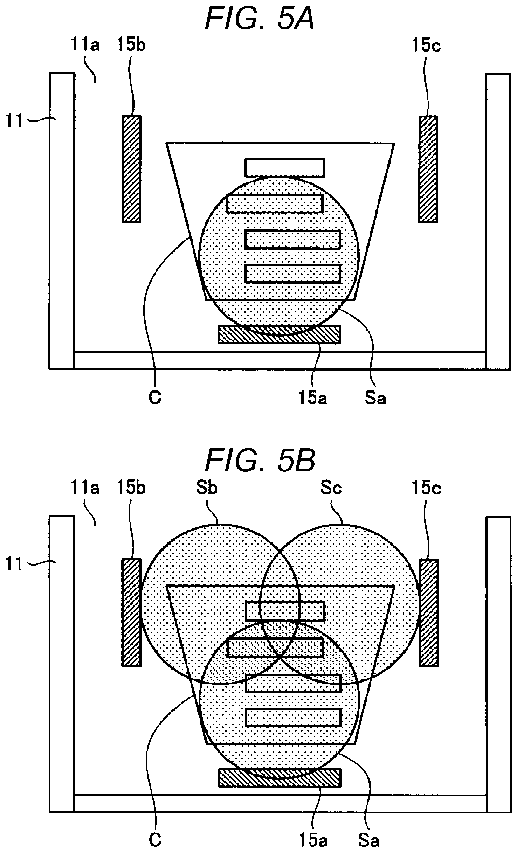

Specifically, as a first method, for example, if the shopping basket C containing the commodity is taken into the accommodating unit 11 and the open/close state acquisition unit 301 acquires that the opening/closing lid 12 is moved from the open state to the closed state, the reading control unit 302 increases the radio wave strength of the RFID antennas 15 to expand the communication range. As a second method, for example, if the shopping basket C containing the commodity is taken into the accommodating unit 11 and the open/close state acquisition unit 301 acquires that the opening/closing lid 12 is moved from the open state to the closed state, the reading control unit 302 increases the number of the RFID antennas 15 that emit radio waves to expand the communication range. The expansion of the communication range is described below with reference to the drawings (refer to Figs. 4A, 4B, 5A, and 5B).

If the reading end instruction is received from the settlement processing device 2, the reading control unit 302 ends the reading by the reader/writer unit 31. If the registration completion instruction is received from the settlement processing device 2, the reading control unit 302 controls the reader/writer unit 31 to start the writing of a registration completion flag. The registration completion flag indicates that the sales registration is completed and is written in a predetermined storage region of the RFID tag.

The communication control unit 303 controls the communication I/F 34 to perform transmission/reception of various data and information to or from the settlement processing device 2 through the communication I/F 34. For example, the communication control unit 303 receives the reading start instruction transmitted from the settlement processing device 2. The communication control unit 303 also receives information that the reading is not yet completed transmitted from the settlement processing device 2. The communication control unit 303 transmits the commodity code read from the RFID tag by the reading control unit 302 to the settlement processing device 2. The communication control unit 303 also receives the reading end instruction transmitted from the settlement processing device 2. The communication control unit 303 also receives the registration completion instruction transmitted from the settlement processing device 2.

The expansion of the communication range between the RFID antennas 15 and the RFID tags is described. Figs. 4A and 4B are diagrams respectively illustrating the expanded communication range when increasing the radio wave strength of the RFID antennas. As illustrated in Fig. 4A, the RFID antenna 15a emits radio waves from the bottom surface and the RFID antennas 15b and 15c emit radio waves from the side surfaces to the shopping basket C contained in the accommodating unit 11. However, in Fig. 4A, communication ranges Sa, Sb, and Sc of radio waves from the RFID antennas 15a to 15c do not cover all the commodities contained in the shopping basket C. In such case, there may be a case in which the reading control unit 302 cannot read the commodity information from the RFID tag.

The reading control unit 302 increases the radio wave strength of the RFID antennas 15 after the opening 11a of the accommodating unit 11 is closed by the opening/closing lid 12 and thus the shopping basket C is surrounded by the radio wave absorber. Accordingly, as illustrated in Fig. 4B, the communication ranges Sa, Sb, and Sc of radio waves from the RFID antennas 15a to 15c are expanded to all the commodities contained in the shopping basket C. Accordingly, the reading control unit 302 can read the commodity information from the RFID tags of all the commodities. The reading control unit 302 does not erroneously read the commodity information from an RFID tag present outside the accommodating unit 11 by setting the accommodating unit 11 in the closed state by the opening/closing lid 12.

Figs. 5A and 5B are diagrams respectively illustrating the expanded communication range when increasing the number of the RFID antennas. As illustrated in Fig. 5A, only the RFID antenna 15a emits radio waves from the bottom surface to the shopping basket C contained in the accommodating unit 11. However, in Fig. 5A, the communication range Sa of radio waves from the RFID antenna 15a does not cover all the commodities contained in the shopping basket C. In such case, there may be a case in which the reading control unit 302 cannot read the commodity information from the RFID tag.

The reading control unit 302 emits radio waves also from the RFID antennas 15b and 15c after the opening 11a of the accommodating unit 11 is closed by the opening/closing lid 12 and thus the shopping basket C is surrounded by the radio wave absorber. In other words, the number of the RFID antennas 15 that emit radio waves is increased. Accordingly, as illustrated in Fig. 5B, the communication ranges Sa, Sb, and Sc of the radio waves from the RFID antennas 15a to 15c cover all the commodities contained in the shopping basket C. The reading control unit 302 can read the commodity information from the RFID tags of all the commodities. In the same manner as described above, further, the reading control unit 302 does not erroneously read the commodity information from an RFID tag existing outside the accommodating unit 11 by setting the accommodating unit 11 in the closed state by the opening/closing lid 12.

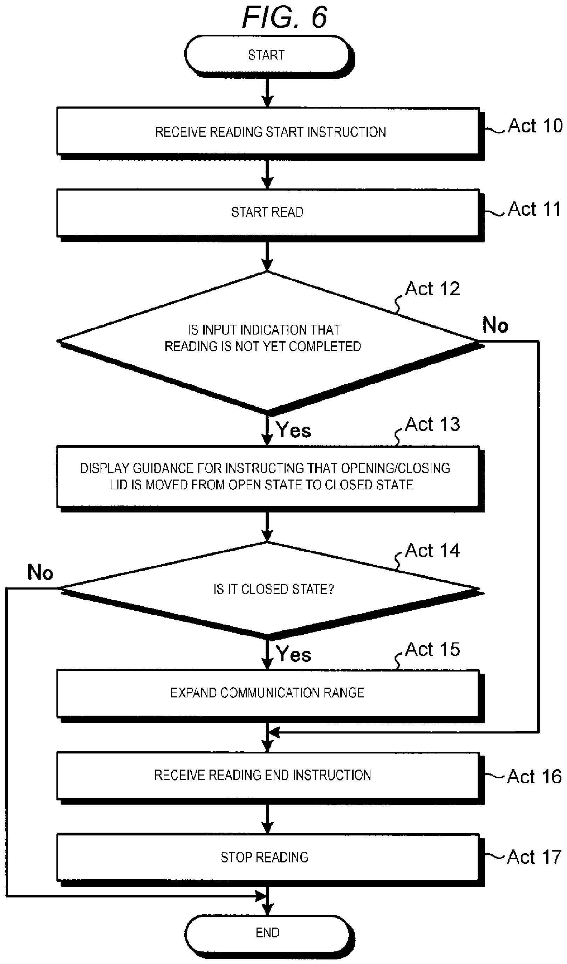

Next, an operation of the self-checkout apparatus is described. Fig. 6 is a flowchart illustrating the operation of the self-checkout apparatus according to the first embodiment.

First, the user who is a customer operating the self-checkout apparatus 1 takes the shopping basket C in which commodities are contained into the accommodating unit 11. Next, the user operates the reading start button displayed on the display 3b of the self-checkout apparatus 1 to input the reading start instruction, and then a processing of the self-checkout apparatus 1 starts.

In the settlement processing device 2, if the input receiving unit 202 receives the input of the reading start instruction (Act 10), the communication control unit 203 transmits the reading start instruction to the reading device 10. In the reading device 10, if the communication control unit 303 receives the reading start instruction, the reading control unit 302 starts reading of the RFID tags (Act 11).

After the processing in Act 11, in the settlement processing device 2, if the input receiving unit 202 receives the information that the reading is not yet completed (Yes in Act 12), the display control unit 201 displays the guidance for instructing that moving the opening/closing lid 12 from the open state to the closed state on the display 3b (Act 13).

The communication control unit (communication controller) 203 of the settlement processing device 2 transmits the information that the reading is not yet completed to the reading device 10, and in the reading device 10, the open/close state acquisition unit 301 determines the open/close state of the opening/closing lid 12 (Act 14). If the open/close state acquisition unit 301 acquires that the opening/closing lid 12 is moved from the open state to the closed state (Yes in Act 14), the reading control unit 302 expands the communication ranges between the RFID antennas 15 and the RFID tags (Act 15). On the other hand, if a predetermined time elapses without acquiring that the opening/closing lid 12 is moved from the open state to the closed state (No in Act 14), the open/close state acquisition unit 301 ends the processing.

If the communication ranges are expanded, the reading control unit 302 controls the reader/writer unit 31 to read the commodity information from the RFID tags attached to all the commodities contained in the shopping basket C. In Act 12, even if no input indicating that the reading is not yet completed is received also (No in Act 12), the reading control unit 302 reads the commodity information from the RFID tags attached to all the commodities.

Then, the processing of the self-checkout apparatus 1 is ended if the commodity information of all the commodities is read, and the user operates the reading end button displayed on the display 3b of the self-checkout apparatus 1 to input the reading end instruction.

In the settlement processing device 2, if the input receiving unit 202 receives the input of the reading end instruction (Act 16), the communication control unit 203 transmits the reading end instruction to the reading device 10. In the reading device 10, if the communication control unit 303 receives the reading end instruction, the reading control unit 302 stops the reading of the RFID tag (Act 17).

As described above, in the self-checkout apparatus 1 according to the first embodiment, the shopping basket C containing commodities is accommodated in the accommodating unit 11 to read commodity information of each commodity from the RFID tag attached to the each commodity. At the time, if commodity information of the commodities present in the shopping basket C cannot be read, commodity information of all the commodities can be read by setting the accommodating unit 11 in the closed state by the opening/closing lid 12 and expanding the communication ranges of the RFID antennas 15. If commodity information of all the commodities in the shopping basket C can be read even while the opening/closing lid 12 is maintained in the open state, commodity information can be read simply by taking the shopping basket C in the accommodating unit 11. Even if commodity information of all the commodities in the shopping basket C cannot be read, commodity information of all the commodities can be read by setting the opening/closing lid 12 in the closed state and expanding the communication ranges. Consequently, a reading time of commodity information can be reduced by enhancing operability, and a reading rate of commodity information can be improved.

### Modification of First Embodiment

In the self-checkout apparatus of the first embodiment, if commodity information of all the commodities in the shopping basket C cannot be read, the accommodating unit is set in the closed state by the opening/closing lid, and the communication ranges of the RFID antennas are expanded to read commodity information of all the commodities. On the contrary, in a self-checkout apparatus of a modification, if commodity information of all the commodities in the shopping basket C cannot be read, the accommodating unit is set in the closed state by the opening/closing lid, and the communication range of an RFID antenna is adjusted (moved) to read commodity information of all the commodities.

An appearance showing a configuration of a self-checkout apparatus 5 including a reading device 50 and the settlement processing device 2 is the same as that of the first embodiment (refer to Fig. 1).

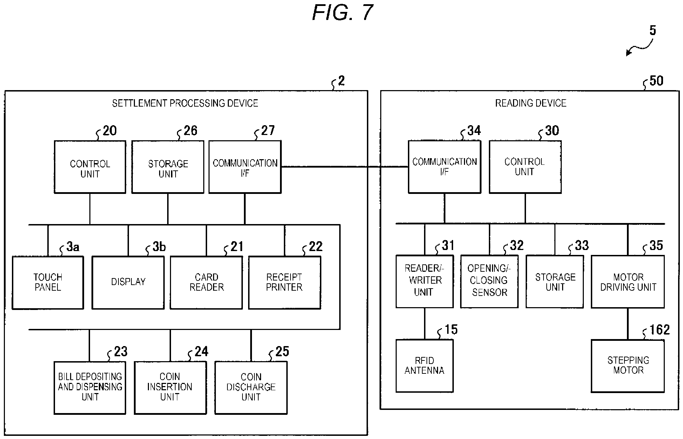

Next, a hardware configuration of the self-checkout apparatus 5 is described. Fig. 7 is a diagram illustrating a hardware configuration of the self-checkout apparatus according to the modification of the first embodiment. In the self-checkout apparatus 5, a motor driving unit 35 and a stepping motor 162 are added to the self-checkout apparatus 1, and thus, the description of other configurations are omitted.

The motor driving unit 35 is a driver circuit for operating the stepping motor 162. The motor driving unit 35 outputs a pulse signal for rotating the stepping motor 162 by a predetermined angle (step angle) under the control of the control unit 30.

Next, a functional configuration of the self-checkout apparatus 5 is described with reference to Fig. 3. In the self-checkout apparatus 5 of the modification, functions of the reading control unit thereof are partially different from the reading control unit 302 of the first embodiment.

Specifically, if information, input by the user, that the reading is not yet completed is received from the settlement processing device 2 and the open/close state acquisition unit 301 acquires information that the opening/closing lid 12 is moved from the open state to the closed state, the reading control unit 302 of the modification moves the communication range of the RFID antenna 15 to the RFID tag. Accordingly, the RFID tag of the commodity of which commodity information cannot be read becomes readable.

In other words, if the shopping basket C containing commodities is accommodated in the accommodating unit 11 and the open/close state acquisition unit 301 acquires information that the opening/closing lid 12 is moved from the open state to the closed state, the reading control unit 302 moves the RFID antenna 15a to move the communication range.

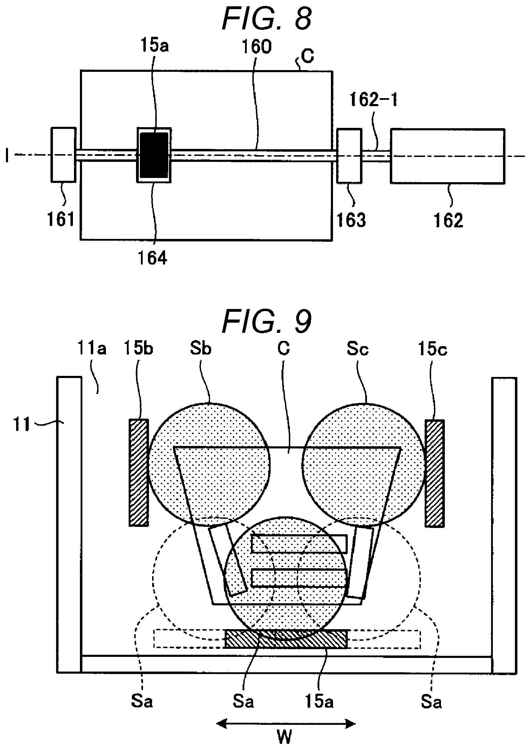

A moving mechanism of the RFID antenna is described. Fig. 8 is a plan view illustrating an example of the moving mechanism of the RFID antenna. In the modification, the RFID antenna 15a is provided on the bottom surface of the accommodating unit 11 (refer to Fig. 9) and is movable along the bottom surface of the accommodating unit 11. In Fig. 8, the outer shape of the shopping basket C is illustrated schematically to show a positional relationship of the RFID antenna 15a and the shopping basket C.

The moving mechanism is a linear motion mechanism mainly including a screw shaft 160, a bearing 161 of the screw shaft 160, the stepping motor 162 as a rotation power source, a coupling 163 transmitting rotation power to the screw shaft 160, a moving base 164 integrally formed with a ball screw nut engaged with the screw shaft 160.

One of the ends of the screw shaft 160 is horizontally supported by the bearing 161 and the other end thereof is supported by the coupling 163 in a freely rotatable manner. An output shaft 162-1 of the stepping motor 162 is connected to the other end of the screw shaft 160 in the coupling 163. With the above arrangement, the rotation power of the stepping motor 162 is transmitted from the output shaft 162-1 to the screw shaft 160 through the coupling 163.

The moving base 164 has a through hole on the main body and the ball screw nut of the screw shaft 160 is embedded in the through hole. The ball screw nut described above is engaged with the screw shaft 160 and thus the moving base 164 moves forward and backward along the screw shaft 160 as the screw shaft 160 rotates. Since metal balls (steel balls) are interposed in a screw part between the screw shaft 160 and the ball screw nut during the movement, the moving base 164 can move smoothly.

As described above, a rotary movement of the stepping motor 162 is changed to a linear movement by the ball screw mechanism described above to enable the moving base 164 to move forward and backward. The moving base 164 moves in a sliding motion while bringing a part of the main body into contact with a linear guide (not illustrated) so that the main body of the moving base 164 does not rotate with the rotation of the screw shaft 160. Accordingly, the moving base 164 linearly moves with respect to the screw shaft 160 while maintaining a posture thereof constantly.

The RFID antenna 15a is fixed on the upper surface of the main body of the moving base 164 such that a reading surface of the RFID antenna 15a is oriented upward. The reading surface refers to a radiation surface from which a planar patch antenna radiates radio waves. Accordingly, the RFID antenna 15a radiates radio waves having a high strength from the reading surface toward the shopping basket C.

With the configuration as described above, if the stepping motor 162 is rotated in a predetermined direction, the moving base 164 moves forward to the right in the figure on the screw shaft 160. If the stepping motor 162 is rotated reversely, the moving base 164 moves backward to the left in the figure on the screw shaft 160. Due to the movement of the moving base 164 as described above, the RFID antenna 15a moves integrally with the moving base 164 while maintaining the reading surface upward. With the movement, the RFID antenna 15a communicates with the RFID tag while moving the communication range with respect to the RFID tag.

The movement of the communication range of the RFID antenna 15 with the RFID tag is described. Fig. 9 is a diagram illustrating the communication range when the RFID antenna is moved. As illustrated in Fig. 9, the RFID antenna 15a emits radio waves from the bottom surface and the RFID antennas 15b and 15c respectively emit radio waves from the side surfaces to the shopping basket C in the accommodating unit 11. However, in Fig. 9, the communication ranges Sa, Sb, and Sc by the radio waves from the RFID antennas 15a to 15c do not cover all the commodities in the shopping basket C. In such case, commodity information may not be read from the RFID tags.

The reading control unit 302 moves the RFID antenna 15a in a direction indicated by an arrow W after the opening 11a of the accommodating unit 11 is set in the closed state by the opening/closing lid 12 to surround the shopping basket C with the radio wave absorbers. As illustrated in broken lines of Fig. 9, the communication range Sa of the radio waves from the RFID antenna 15a is moved and thus the communication ranges cover all the commodities in the shopping basket C. Accordingly, the reading control unit 302 can read commodity information from the RFID tags of all the commodities. Further, the reading control unit 302 does not erroneously read commodity information from an RFID tag existing outside the accommodating unit 11 by setting the accommodating unit 11 in the closed state by the opening/closing lid 12.

As described above, in the self-checkout apparatus 5 according to the modification, the shopping basket C containing commodities is taken in the accommodating unit 11, and commodity information of commodities is read from the RFID tags attached to the commodities. At this time, if commodity information of all the commodities in the shopping basket C cannot be read, commodity information of all the commodities can be read by setting the accommodating unit 11 in the closed state by the opening/closing lid 12 and moving the communication range of the RFID antenna 15. In other words, if commodity information of all the commodities can be read even while the opening/closing lid 12 is maintained in the open state, commodity information can be read simply by taking the shopping basket C in the accommodating unit 11. Even if commodity information of all the commodities cannot be read, commodity information of all the commodities can be read by setting the opening/closing lid 12 in the closed state and moving the communication range. Consequently, a reading time of the commodity information can be reduced by improving the operability, and the reading rate of commodity information can be increased.

In certain embodiments described above, the input receiving unit 202 and the display control unit 201 are included in the settlement processing device 2 on the one hand, but may be included in the reading device 10, on the other hand. In the case, the sales registration and the settlement processing of the commodity can be performed while executing a transmission/reception of various data and information between the reading device 10 and the settlement processing device 2 by the communication control unit 203 and the communication control unit 303.

The programs executed by the reading devices 10 and 50 of at least one embodiment are provided by being installed in the ROM and the like in advance. The programs executed by the reading devices 10 and 50 of at least one embodiment may be provided by being recorded in a computer-readable recording medium such as a CD-ROM, a flexible disk (FD), a CD-R, or a digital versatile disk (DVD) in a file having an installable format or an executable format.

Further, the programs executed by the reading devices 10 and 50 of at least one embodiment may be provided by storing the programs on a computer connected to a network such as the internet and downloading the programs via a network. The programs executed by the reading devices 10 and 50 of at least one embodiment may be provided or distributed via a network such as the internet.

The programs executed by the reading devices 10 and 50 of at least one embodiment have a module configuration including each unit (open/close state acquisition unit, reading control unit (a reading controller), and communication control unit) described above. The CPU (processor) reads the program from the storage medium described above and loads each module described above on a main storage device. Accordingly, each unit described above is generated on the main storage device.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of embodiments described herein may be made without departing from the spirit of the invention. The accompanying claims and their equivalents are intended to cover such forms or modifications as would fall within the scope and spirit of the invention.

## Claims

1. A reader that reads commodity information relating to a commodity from a wireless tag attached to the commodity, comprising:
a housing having an opening through which the housing is configured to receive the commodity, and an opening/closing lid configured to open or close the opening;
an antenna configured to emit radio waves to communicate with the wireless tag;
an open/close state controller configured to acquire an open state or a closed state of the opening/closing lid; and
a reading controller configured to read the commodity information from the wireless tag of the commodity by modifying a communication range of the antenna to the wireless tag when the commodity is accommodated in the housing and the opening/closing lid is moved from the open state in which the opening is open to the closed state in which the opening is closed.

2. The reader according to claim 1, wherein the reading controller is configured to increase a strength of the radio waves of the antenna to expand the communication range when the commodity is accommodated in the housing and the opening/closing lid is moved from the open state to the closed state.

3. The reader according to claim 1 or 2, further comprising:
a plurality of antennas,
wherein the reading controller is configured to increase a number of the antennas which emit radio waves to expand the communication range when the commodity is accommodated in the housing and the opening/closing lid is moved from the open state to the closed state.

4. The reader according to any of claims 1 to 3, wherein the reading controller is configured to adjust the antenna to move the communication range when the commodity is accommodated in the housing and the opening/closing lid is moved from the open state to the closed state.

5. The reader according to any of claims 1 to 4, further comprising:
an input receiver configured to receive an input indicating incomplete reading, such that commodity information of a plurality of commodities accommodated in the housing cannot be read; and
an output controller configured to output guidance to move the opening/closing lid from the open state to the closed state when the input of the incomplete reading is received.

6. The reader according to claim 4 or 5, wherein the reading controller is configured to adjust the antenna by moving the antenna linearly to be closer to the wireless tag.

7. The reader according to any of claims 1 to 6, wherein the housing is configured to surround outer sides of a container storing the commodity when the container is inserted through the opening.

8. A method for reading commodity information from a wireless tag attached to a commodity by a reader including a housing having an opening through which the commodity is taken therein, an opening/closing lid for opening or closing the opening, and an antenna that emits radio waves to communicate with the wireless tag, the method including:
reading commodity information relating to the commodity from the wireless tag of the commodity accommodated in the housing through the antenna;
acquiring an open/close state of the opening/closing lid; and
modifying a communication range of the antenna to the wireless tag when the commodity is accommodated in the housing and the opening/closing lid is moved from the open state in which the opening is open to the closed state in which the opening is closed.

9. The method according to claim 8, further comprising increasing a strength of the radio waves of the antenna to expand the communication range when the commodity is accommodated in the housing and the opening/closing lid is moved from the open state to the closed state.

10. The method according to any of claims 8 to 9, further comprising:
increasing a number of antennas which emit radio waves to expand the communication range when the commodity is accommodated in the housing and the opening/closing lid is moved from the open state to the closed state.

11. The method according to any of claims 8 to 10, further comprising:
adjusting the antenna to move the communication range when the commodity is accommodated in the housing and the opening/closing lid is moved from the open state to the closed state.

12. The method according to any of claims 8 to 11, further comprising:
receiving an input indicating incomplete reading, such that commodity information of a plurality of commodities accommodated in the housing cannot be read; and
outputting guidance to move the opening/closing lid from the open state to the closed state when the input of the incomplete reading is received.

13. The method according to claim 11 or 12, further comprising:
adjusting the antenna by moving the antenna linearly to be closer to the wireless tag.

14. A system that reads commodity information relating to a plurality of commodities from a plurality of wireless tags respectively attached to the plurality of commodities, comprising:
an antenna configured to emit radio waves to communicate with the respective wireless tags; and
a controller configured to
acquire a first state or a second state of a lid of a housing configured to store the plurality of commodities; and
read commodity information from the wireless tags of the plurality of commodities by adjusting a communication range of the antenna to the wireless tags when at least one of the plurality of commodities is accommodated in the housing and the lid is moved from the first state, in which the lid is open, to the second state, in which the lid is shut.
